# FASCICULE DE BREVET EUROPEEN

(11) **EP 0 835 712 B1**
(45) Date de publication et mention de la délivrance du brevet: **08.12.1999**
(21) Numéro de dépôt: 96810684.9
(22) Date de dépôt: 11.10.1996
(51) Int. Cl.: B23K 11/00, E01B 29/42

(54) **Procédé de soudage d'au moins une file de rails et machine pour la mise en oeuvre du procédé**
Verfahren zum Schweissen mindestens eines Schienenstranges und Maschine zur Anwendung dieses Verfahrens
Method for welding at least one rail string and machine for using that method

(43) Date de publication de la demande: 15.04.1998
(73) Titulaire: SCHEUCHZER S.A., CH-1007 Lausanne (CH)
(72) Inventeur: Scheuchzer, Antoine, 1066 Epalinges (CH); Schelling, Gérard, 1093 La Conversion (CH); Wenger, Christian, 1030 Bussigny (CH); Aubert, Jean-Jacques, 1110 Morges (CH)
(74) Mandataire: Jörchel, Dietrich R.A.

(56) Documents cités:
- EP-A- 0 326 794
- EP-A- 0 466 651
- DE-A- 4 445 052
- GB-A- 2 159 449

## Description

La présente invention concerne un procédé de soudage d'au moins une file de nouveaux rails de chemin de fer à substituer aux anciens rails, préalablement déposés sur la voie, au moyen d'une machine roulant sur les anciens rails munie notamment d'un appareil de soudage par étincelage-forgeage, de moyens de meulage et de moyens de saisie et de guidage des nouveaux rails.

Lors de la pose d'une nouvelle voie ferrée ou lors du renouvellement d'une voie existante, des tronçons de rails sont soudés les uns aux autres afin de former des files continues de rails.

La longueur des tronçons de rails utilisés varie d'un pays à l'autre. En Suisse, par exemple, ces tronçons ont une longueur de 108 mètres. Le soudage de ces tronçons les uns aux autres se fait par différents procédés et machines, tous présentant des avantages dans certaines situations et des inconvénients dans d'autres. Ainsi, l'on donnera la préférence à des procédés et machines moins automatisés dans les pays où le coût de la main d'oeuvre est réduit et au contraire dans les pays où le coût de la main d'oeuvre est élevé, à des procédés et machines plus automatisés.

L'un des soucis majeurs lors de travaux de réfection est d'atteindre une vitesse d'avance des travaux aussi grande que possible sans nuire à la qualité du travail effectué, de manière à réduire le coût des travaux entrepris d'une part, et à libérer la voie pour le trafic commercial d'autre part. Souvent, lorsqu'il s'agit de travaux d'entretien ou de renouvellement, ceux-ci s'effectuent durant la nuit quand le trafic commercial sur les voies ferrées est réduit, voire inexistant.

Les travaux de soudage et de finition, à savoir ébavurage et meulage du joint de soudure, étant des travaux de précision relativement long à exécuter, il a été proposé de souder deux barres de rail entre elles et d'accomplir tous ces travaux de finition en dehors du site de la voie ferrée, par exemple dans un atelier, et de transporter sur le site des tronçons de rail ayant le double de la longueur des tronçons utilisés habituellement, ce qui diminue ainsi de moitié les travaux de soudage et de finition devant être effectués sur le site. Ce procédé présente toutefois un inconvénient majeur: le transport des longs rails nécessite de très longs Wagons. D'autre part, la manipulation de ces longues barres n'est pas aisée et elles subissent des déformations qui devront être corrigées ultérieurement.

Différents dispositifs pour tirer les rails et mettre face à face les abouts à souder ont également été développés.

La demande de brevet EP 0 597 736 propose un procédé de soudage par étincelage. Ce procédé tente en particulier d'éliminer les contraintes auxquelles les rails sont soumis lorsqu'une machine pesant plusieurs tonnes s'appuie dessus pendant le travail de soudage, provoquant ainsi des déformations qui devront être corrigées. Selon ce procédé, les rails sont posés et fixés par des tirefonds sur les traverses et cela sur une certaine longueur. Lors de la réfection d'une telle voie, les tirefonds situés en amont du point de soudure sont desserrés sur une longueur comprise entre 10 et 40 mètres; les tirefonds situés en aval sont desserrés sur toute la longueur du tronçon du rail. Puis on procède au soudage au moyen d'une machine s'appuyant non pas sur les rails mais sur le sol. De cette manière, pendant le travail de soudage et le début du refroidissement, les rails ne sont pas soumis à des contraintes dues au poids de la machine. La libération partielle de l'un des tronçons de rail et la libération totale de l'autre tronçon de rail permet en outre de faire coulisser librement ce dernier lors de la soudure et d'éviter de soumettre les deux tronçons à des contraintes à proximité du joint de soudure, contraintes qui pourraient engendrer des déformations permanentes à corriger ultérieurement. Après le travail de soudure, les tirefonds sont remis en place et l'on passe aux joints de soudure suivants. Ce procédé permet effectivement de réaliser une soudure dans de bonnes conditions. Néanmoins, les manipulations nécessitées par la pose des rails, le desserrage des tirefonds pour permettre le soudage, le nouveau tirefonnage pour fixer les rails ainsi que le désenraillement et l'enraillement de la machine sont des opérations relativement lourdes et longues. D'autre part, ce document ne mentionne pas le travail de meulage du joint de soudure.

Dans le brevet FR 2 719 608 a été décrit un procédé de soudage par étincelage au moyen d'une machine de soudage suspendue en porte-à-faux à un bras qui s'avance au-dessus des rails pendant l'opération de soudage. Les tirefonds sont préalablement desserrés de part et d'autre du point de soudure et les rails sont libres à l'extrémité située en aval de ce point. Pour le maintien en dressage et en nivellement des rails, deux chariots auxiliaires, roulant sur la voie et munis de moyens adéquats, sont en plus utilisés de chaque côté du point de soudure. De plus, pour éviter que la voie ne subisse le poids de ces chariots, des dispositifs d'appui complémentaire des chariots sur le ballast ou sur les traverses sont employés. Dans ce cas également, les tirefonds doivent être d'abord desserrés pour pouvoir procéder à l'opération de soudage des rails, et ensuite tirefonnés à nouveau pour fixer les rails soudés. Aucune opération de meulage n'est en outre prévue.

La déposante a décrit dans le brevet EP 0 466 651 un train de substitution de rails de voie de chemin de fer roulant à la fois sur l'ancienne et sur la nouvelle voie, ce train comprenant entre autres un véhicule de soudage muni d'une unité de soudage pour souder les extrémités adjacentes des nouveaux rails de manière à former des files continues de rails, et un véhicule chauffant les rails afin d'obtenir leur neutralisation, c'est-à-dire de poser et fixer le rail à un état de moindre dilatation correspondant à une température moyenne d'environ 25°. Cette opération permet de diminuer le risque de rupture des rails lorsqu'il fait froid ou de déformation lors de grandes chaleurs. Les nouveaux rails sont préalablement déposés au milieu de la voie entre les anciens rails et sont soumis aux travaux de soudage et de neutralisation avant d'être posés à la place des anciens rails par un véhicule de montage.

Le procédé de soudage selon EP-B-466651 comprend les étapes suivantes:
- on lève les rails par des rouleaux de guidage suspendus au châssis, puis on amène et on maintient les abouts des rails en position de travail en ligne droite au moins sur la longueur de la machine par des moyens de positionnement,
- on déplace l'appareil de soudage d'une position d'attente en une position de travail et on procède au soudage de deux abouts de rails d'une file par étincelage-forgeage, tout en permettant au rail se trouvant en aval de coulisser longitudinalement lors du soudage,
- on dégage l'appareil de soudage dès que la soudure est terminée et on le déplace soit dans la position de travail suivante, soit en position d'attente,
- on procède au meulage du joint soudé,
- on dépose les rails soudés au centre de la voie.
Le véhicule de soudage comporte à la tête une grue à rail, une cabine et, suspendue au châssis, une unité de soudage par étincelage-forgeage, des moyens pour le positionnement des rails à souder ainsi qu'une unité de meulage pour l'usinage des soudures. A l'arrière se trouve un groupe générateur. Des rouleaux de guidage suspendus au châssis guident les rails avant leur positionnement et après le soudage.

Le but de la présente invention est de proposer un procédé rapide pour le soudage des rails et le meulage des joints de soudure avant que la file de rails ne passe dans le véhicule de neutralisation qui est l'objet du brevet précité.

Le procédé selon l'invention est défini par les étapes de la revendication indépendante 1.

Les revendications dépendantes 2 à 8 définissent des étapes particulières du procédé selon l'invention.

Le procédé selon l'invention comporte les étapes suivantes:
- on saisit par des moyens de préhension, on lève, on amène et on maintient les abouts des rails en position de travail en ligne droite au moins sur la longueur de la machine,
- on déplace l'appareil de soudage d'une position d'attente en une position de travail et on procède au soudage de deux abouts de rails d'une file par étincelage-forgeage, tout en permettant au rail se trouvant en aval de coulisser longitudinalement lors du soudage,
- on dégage l'appareil de soudage dès que la soudure est terminée et on le déplace soit dans la position de travail suivante, soit en position d'attente,
- on amène un premier moyen de meulage d'une position d'attente en une position de travail sur le joint soudé et on procède au meulage du dessous du patin des rails dans la région de la soudure pour enlever le bourrelet de la soudure,
- on enlève ledit premier moyen de meulage dès que le meulage est terminé et on le ramène en position d'attente,
- on amène un deuxième moyen de meulage d'une position d'attente en une position de travail sur le joint soudé et on procède au meulage de la table de roulement et des joues de roulement du champignon du rail dans la région de la soudure,
- on enlève ledit deuxième moyen de meulage dès que le meulage est terminé et on l'amène soit sur un joint soudé suivant, soit en position d'attente,
- on dépose les rails soudés au centre de la voie et on les libère des moyens de préhension.

L'un des avantages essentiels de ce procédé est le fait que les rails sont maintenus en ligne droite à la fois pendant les opérations de soudage et de meulage. Leur déformation, qui nécessiterait une correction pour les redresser, est ainsi empêchée. Un autre avantage est que les opérations de meulage du dessous du patin et du champignon des rails sont effectuées juste après l'opération de soudage, pendant que les rails sont encore maintenus en ligne droite, ce qui évite des manipulations supplémentaires.

Ce procédé permet en particulier le soudage successif des joints de deux files de rails. Ainsi, pendant le soudage des abouts de rails de la deuxième file, le meulage du dessous du patin de la première file peut être effectué dans la région de la soudure, et, pendant le meulage du dessous du patin de la deuxième file dans la région de la soudure, le meulage du champignon de la première file de rails peut être effectué dans la région de la soudure. Cette simultanéité des opérations sur les deux files rend le procédé proposé plus rapide.

De plus, dans le procédé proposé, aucun travail préalable de montage et de démontage des rails n'est nécessaire puisque les rails sont libres et posés au milieu de la voie, la machine circulant quant à elle sur les anciens rails. Lorsque la nouvelle file de rails est reposée au milieu de la voie après la soudure et le meulage, aucune déformation due à ces travaux ne subsiste puisque les rails n'étaient soumis à aucune charge autre que celle du forgeage appliqué par l'appareil de soudage. Le maintien permanent des deux rails de part et d'autre de la soudure, pendant les opérations de soudage, de refroidissement éventuel et de meulage, évite l'apparition de déformations qui pourraient être engendrées par ces opérations si les rails étaient libérés immédiatement après le soudage. D'autre part, le soudage des deux abouts se fait en maintenant les deux tronçons de rail en ligne droite au moins sur la longueur du véhicule, même lorsque celui-ci se trouve dans une courbe de la voie. De cette manière, après soudage, on obtient un rail continu sans les déformations et les contrainte dues au fait que le soudage a eu lieu dans une courbe de la voie. La forme définitive du rail sera donnée lors de la pose, sans que le joint de soudure ne soit un élément auquel il faille prêter une attention particulière. C'est ainsi que disparaît, grâce à ce procédé, la contrainte de devoir positionner la soudure des rails entre deux traverses ou encore l'obligation d'aligner transversalement les soudures de la file gauche sur celles de la file droite des rails.

Ce procédé permet en outre l'exécution d'une étape particulière et facultative qui consiste en un refroidissement accéléré du champignon avant l'opération de meulage, ce qui correspond à un trempage du champignon. Pour réaliser cette étape de refroidissement, des jets d'air peuvent être utilisés.

Selon un mode d'exécution préféré, les rails sont déposés sur des supports à galets disposés au milieu de la voie, ces galets facilitant le coulissement longitudinal des rails lors de différents travaux et évitant donc des contraintes créées par la dilatation des rails. Ces supports à galets sont disposés sur la voie avant le passage du véhicule pour le soudage et le meulage et ils sont recueillis après par le véhicule effectuant la neutralisation des rails.

Le procédé selon l'invention peut également être commandé de manière automatique. Dans ce cas, une base de référence orthogonale XYZ est tout d'abord définie sur la machine et la position des moyens mobiles ainsi que leurs déplacements sont mesurés et calculés en permanence dans cette base orthogonale. Les déplacements des moyens de préhension, de l'appareil de soudage et des moyens de meulage s'effectuent alors de la manière suivante dans la base orthogonale:
- les rails sont amenés en position de travail et reposés en voie par des déplacements en Y et en Z des moyens de préhension,
- l'appareil de soudage est positionné précisément sur le joint à souder de la première file, sur le joint à souder de la deuxième file et ramené dans sa position d'attente par des déplacements en X, en Y et en Z,
- le premier moyen de meulage pour le meulage du dessous du patin du rail de la première file est positionné sur le joint soudé par des déplacements en Y et en Z et le meulage est effectué par des mouvements de va-et-vient en Y de la meule,
- le premier moyen de meulage est ramené en position d'attente par des déplacements en Y et en Z,
- le deuxième moyen de meulage pour le meulage du champignon du rail est positionné précisément sur le joint soudé de la première file et sur le joint soudé de la deuxième file par des déplacements en X, en Y et en Z,
- le meulage du champignon de la première file et de la deuxième file est effectué par des mouvements contrôlés de va-et-vient de la meule en X et en Z ainsi que par rotation du deuxième moyen de meulage autour d'un axe parallèle à l'axe X,
- le deuxième moyen de meulage est ramené en position d'attente par des déplacements en X, en Y et en Z,
- le troisième moyen de meulage pour le meulage du dessous du patin du rail de la deuxième file est positionné sur le joint soudé par des déplacements en Y et en Z et le meulage est effectué par des mouvements de va-et-vient en Y de la meule,
- le troisième moyen de meulage est ramené en position d'attente par des déplacements en Y et en Z.

Dans le cas d'un procédé géré par une unité de commande automatique, cette unité de commande est programmable selon les étapes suivantes nécessaires à la mise en oeuvre du procédé:
a) après la saisie des rails par les moyens de préhension, ceux-ci sont amenés en position de travail par les déplacements en Y et en Z des moyens de préhension,
b) l'appareil de soudage est positionné précisément sur le joint à souder de la première file par les déplacements en X, en Y et en Z,
c) la soudure est effectuée sur la première file,
d) l'appareil de soudage est positionné précisément sur le joint à souder de la deuxième file par les déplacements en X, en Y et en Z, puis la soudure est effectuée sur la deuxième file, en même temps que le premier moyen de meulage pour le meulage du dessous du patin du rail de la première file est positionné sur le joint soudé par les déplacements en Y et en Z, et que le meulage est effectué par les mouvements de va-et-vient en Y de la meule,
e) le premier moyen de meulage est amené en position d'attente par les déplacements en Y et en Z dès que l'opération de meulage du dessous du patin de la première file est terminée,
f) l'appareil de soudage est amené dans sa position d'attente par les déplacements en X, en Y et en Z, en même temps que le troisième moyen de meulage pour le meulage du dessous du patin du rail de la deuxième file est positionné sur le joint soudé par les déplacements en Y et en Z, et que le meulage est effectué par les mouvements de va-et-vient en Y de la meule, que le deuxième moyen de meulage pour le meulage du champignon du rail est positionné précisément sur le joint soudé de la première file par les déplacements en X, en Y et en Z, et que le meulage du champignon est effectué par les mouvements contrôlés de va-et-vient de la meule en X et en Z ainsi que par rotation de la meule autour d'un axe parallèle à l'axe X,
g) le troisième moyen de meulage est renvoyé en position d'attente par les déplacements en Y et en Z dès que l'opération de meulage du dessous du patin de la deuxième file est terminée,
h) le deuxième moyen de meulage pour le meulage du champignon du rail est positionné précisément sur le joint soudé de la deuxième file par les déplacements en X, en Y et en Z, et le meulage du champignon est effectué par les mouvements contrôlés de va-et-vient de la meule en X et en Z ainsi que par rotation de la meule autour d'un axe parallèle à l'axe X,
i) le deuxième moyen de meulage est renvoyé dans sa position d'attente par les déplacements en X, en Y et en Z dès que l'opération de meulage du champignon de la deuxième file est terminée,
j) les rails sont reposés en voie par les déplacements en Y et Z des moyens de préhension, puis les rails sont libérés par l'ouverture de ces moyens de préhension.

Cette commande automatique permet, comme on le voit, d'effectuer simultanément plusieurs travaux sur les deux files de rails et donc finalement de gagner du temps sur un cycle complet.

La revendication indépendante 10 définit une machine pour la mise en oeuvre du procédé selon l'invention.

Les revendications dépendantes 11 à 18 définissent des modes de réalisation particuliers de la machine pour la mise en oeuvre du procédé.

Les dessins annexés représentent, à titre d'exemple, une machine pour la mise en oeuvre du procédé selon l'invention.
La figure 1 est une vue schématique du véhicule.
La figure 2 est une vue de côté partielle du véhicule de soudage montrant les éléments essentiels de ce véhicule.
La figure 3 est une vue en coupe de la tête de soudage.
La figure 4 est une vue similaire à la précédente, dans laquelle l'appareil de soudage effectue la soudure sur la deuxième file de rails tandis qu'un refroidissement accéléré est appliqué sur la première soudure.
La figure 5 est une vue de face d'une pince d'établi.
La figure 6 est une vue de face d'un moyen de meulage du dessous du patin.
La figure 7 est une vue de dessus du moyen de meulage du patin.
La figure 8 est une vue en coupe axiale du moyen de meulage du dessous du patin.
La figure 9 est une vue de côté du moyen de meulage du champignon.
La figure 10 est une vue de face du moyen de meulage du champignon.

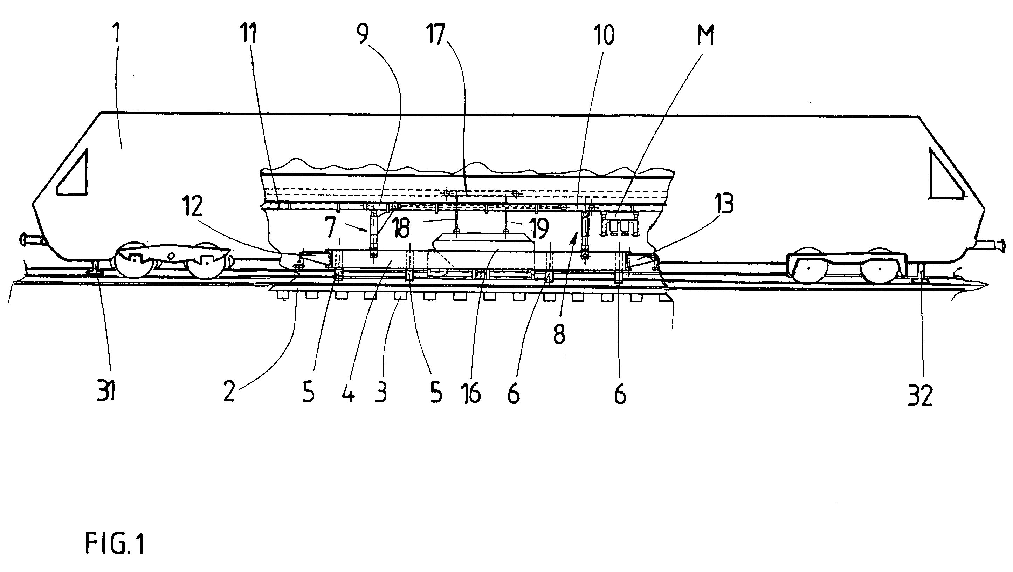

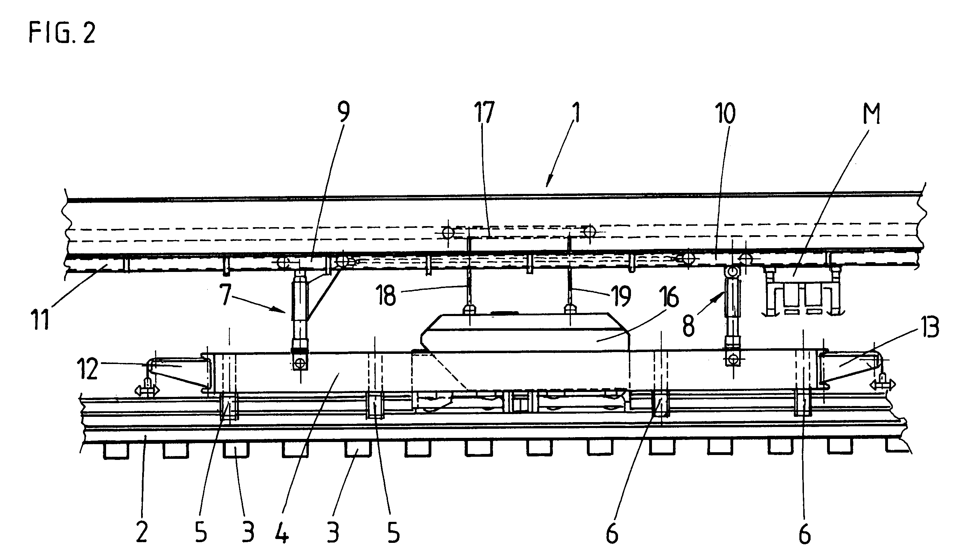

Une machine de soudage montée dans un véhicule est représentée aux figures 1 et 2. Le véhicule 1 comporte deux boggies, un à l'avant et un à l'arrière, et roule sur une voie ferrée comprenant des rails 2 et 2' (non représenté) et des traverses 3. Le véhicule 1 est en outre muni d'un établi comprenant une poutre 4 supportant deux pinces antérieures 5 et deux pinces postérieures 6 pour la saisie des rails à assembler et à meuler qui sont suspendus sur le châssis du véhicule 1 pour chaque file de rails. La poutre 4 de l'établi est suspendue par deux axes 7, 8 de déplacement vertical, l'un à l'avant et l'autre à l'arrière, et ces axes sont solidaires respectivement d'un chariot antérieur 9 et d'un chariot postérieur 10 roulant sur des galets dans des chemins de roulement 11 du châssis pour assurer le déplacement longitudinal de l'établi. Les deux axes 7 et 8 sont avantageusement dotés de deux vérins hydrauliques assurant le déplacement vertical de l'établi et celui des pinces et des rails qui sont tenus par lesdites pinces. Aux deux extrémités de chaque établi, des dispositifs en forme de grue 12 et 13 sont prévus pour pouvoir saisir, comme il sera expliqué ultérieurement, les joints isolants préfabriqués intercalés entre les tronçons de rails soudés. La construction des établis et notamment celle des moyens assurant les déplacements dans les trois directions peut être différente de celle décrite précédemment.

A la figure 1, des pinces 31 et 32 de saisie des rails sont également représentées à l'avant et à l'arrière du véhicule 1.
Dans ces figures 1 et 2, un appareil de meulage M pouvant se déplacer dans trois directions est schématiquement représenté de même que l'appareil de soudage 16, le chariot 17 auquel l'appareil de soudage 16 est suspendu par deux axes 18 et 19.

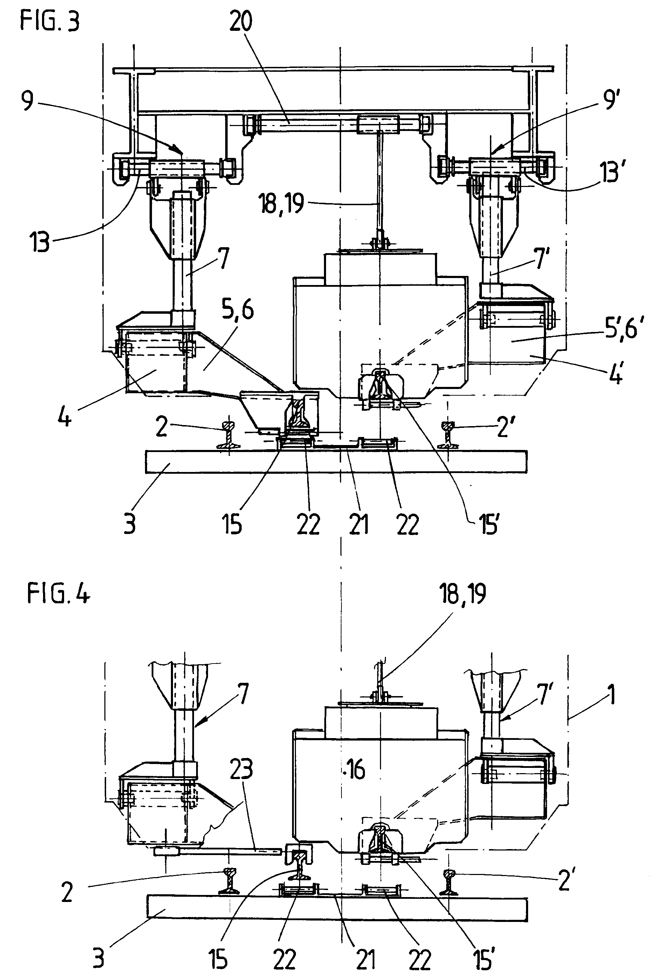

A la figure 3, deux établis sont représentés en détail et référencés. Ainsi, il est possible de distinguer les axes 13 et 13' de deux poutres 4 et 4', ces poutres permettant le déplacement transversal de chaque établi pour le positionnement des rails à souder 15 et 15'. Lesdits axes 13 et 13' font partie des chariots antérieurs 9 et 9' de chaque poutre 4, 4' et des dispositifs similaires sont prévus pour les chariots postérieurs 10 et 10' (non représentés). Le déplacement transversal des poutres 4 et 4' est obtenu par un vérin hydraulique ou pneumatique ou tout autre système similaire. De même, l'appareil de soudage 16 est suspendu à un chariot 17 par deux axes 18 et 19. Le chariot 17 permet le déplacement longitudinal de l'appareil de soudage 16, tandis que les axes 20 permettent le déplacement transversal de l'appareil de soudage 16, d'une part pour se positionner par rapport à la file de rails à souder et, d'autre part pour passer d'une file de rails à l'autre. Là également, le déplacement dans le sens transversal de l'appareil de soudage est obtenu par des vérins hydrauliques ou pneumatiques, ou bien par d'autres moyens équivalents.

Sur la figure 3, on distingue en outre sur la traverse 3 un support à galets 21 muni de deux galets 22 sur lesquels reposent les rails à souder, ce qui permet un coulissement longitudinal des rails soumis à une dilatation lors de la soudure ou à un rétrécissement lors du refroidissement. Ces galets facilitent également le déplacement des rails. De plus, l'appareil de soudage 16 est représenté en position pour effectuer la soudure sur la deuxième file de rails 15' tenue par les pinces 5' et 6', alors que les pinces antérieures 5 et les pinces postérieures 6 de l'établi tiennent le rail 15 de la première file en attente du travail de meulage.

A la figure 4, la situation représentée est la même en ce sens que l'appareil de soudage 16 est positionné sur la deuxième file de rail 15'. En revanche, le rail 15 de la première file est refroidi par un dispositif de refroidissement 23 avant que le meulage du dessous du patin du rail 15 ne soit effectué. Le dispositif de refroidissement 23 peut être agencé pour refroidir le champignon du rail par des jets d'air, le but étant de tremper l'acier en abaissant la température de 800° à 500° en 1 minute.

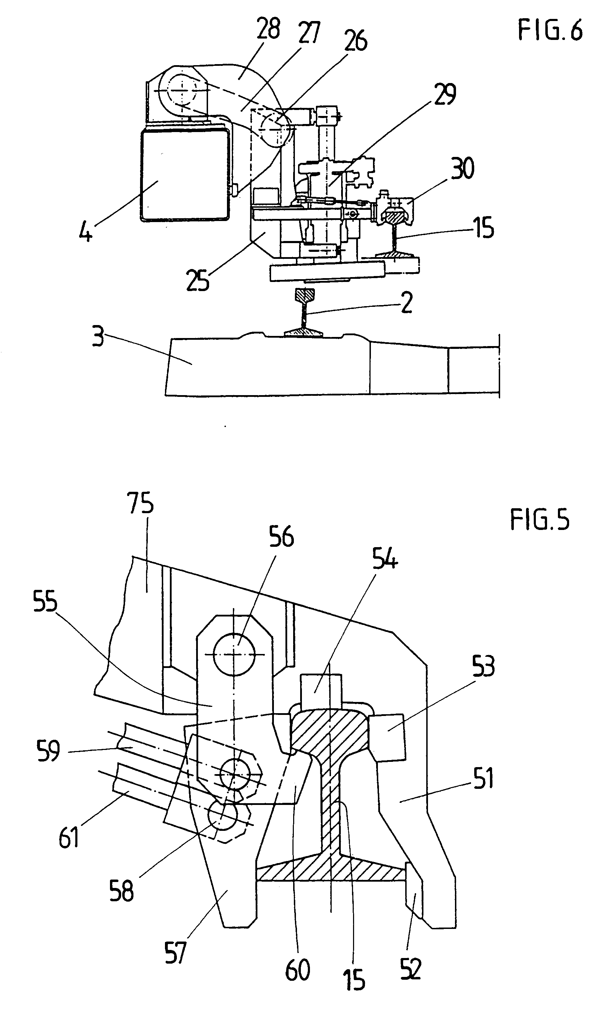

Des organes importants pour la mise en oeuvre du procédé sont les quatre pinces 5, 5', 6, 6' de chaque établi. L'une de ces pinces est représentée à la figure 5. Elle est constituée par une mâchoire fixe 51 solidaire d'un bras 75 fixé sur la poutre 4 de l'établi. La mâchoire 51 comprend trois butées de référence 54, 53, et 52 adaptées au profil du rail 15 à saisir et permettant d'assurer le parfait alignement des abouts des rails. Ces trois butées sont de préférence amovibles pour pouvoir être adaptées à chaque profil de rail. La mâchoire mobile de la pince est constituée par un premier levier 55 articulé sur un premier pivot fixe horizontal 56, un sabot 57 suspendu sur un deuxième pivot horizontal 58, un deuxième levier articulé à une extrémité sur le premier pivot fixe horizontal 56 et à l'autre extrémité sur le deuxième pivot horizontal 58. Le premier levier est actionné par un premier vérin 59 et est agencé pour saisir, positionner et maintenir le champignon du rail dans la pince dans le sens vertical, tandis que l'extrémité libre du deuxième levier est articulée sur le sabot 57, est actionnée par un deuxième vérin 61 en synchronisme avec le premier vérin 59 et est elle aussi agencée pour saisir, positionner et maintenir le rail dans la pince dans le sens transversal.

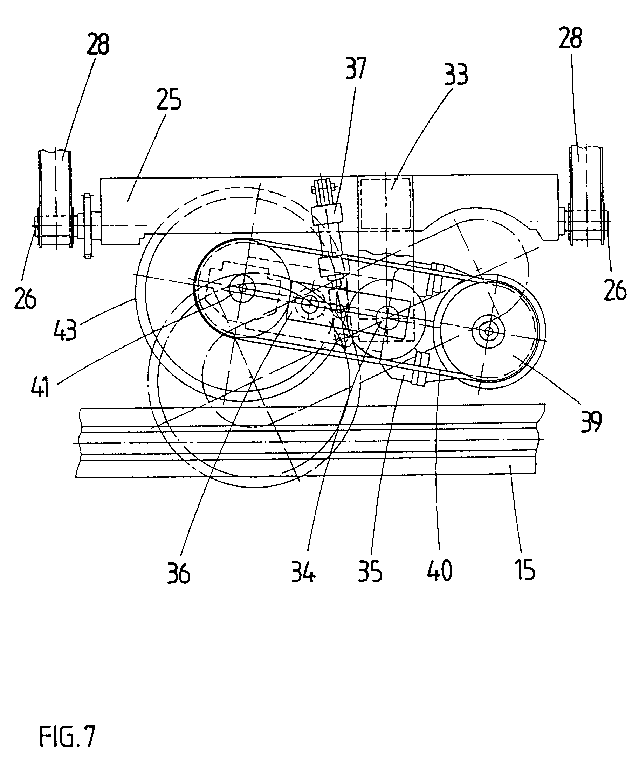

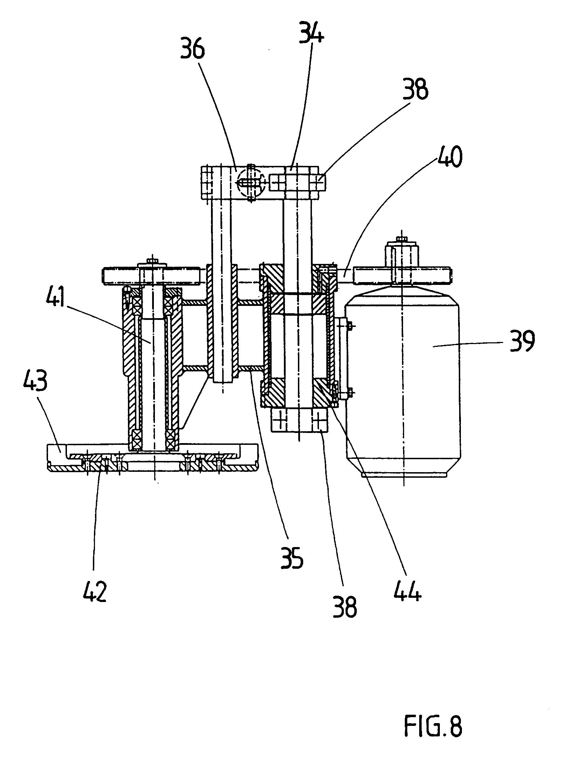

Le moyen de meulage du dessous du patin du rail est décrit en détail en référence aux figures 6 à 8.

Ce moyen de meulage comprend un châssis 25 monté dans des rainures de guidage 27 de deux bras supports 28 par deux tourillons 26, les bras supports 28 étant articulés par une extrémité sur la poutre 4. Un piston non représenté permet de pousser le châssis 25 dans sa position de travail représentée en figure 6 ou de le ramener en position de repos, ce qui est une position décalée de 90° dans le sens contraire des aiguilles d'une montre par rapport à la position de travail. Le châssis 25 supporte, d'une part, une tête de meulage 29 pour meuler le dessous du patin du rail 15 et, d'autre part, un dispositif 30 de refroidissement du rail 15 par jets d'air similaire à celui de la figure 4. Ainsi, dès que le soudage des abouts des rails est terminé, le châssis 25 est basculé pour procéder soit au refroidissement accéléré du champignon et au meulage du dessous du patin, soit uniquement au meulage. Un tel dispositif est monté de manière symétrique sur la poutre 4' afin de pouvoir procéder aux mêmes opérations sur la deuxième file de rails 15'.

Sur le châssis 25 sont montés un support 33 portant un cadre pivotant 35 par l'intermédiaire d'un palier de pivotement latéral 38 et d'un axe de pivotement latéral 34, des moyens, tels qu'un levier 36 et un vérin 37 de commande du pivotement latéral du cadre, pour actionner le pivotement latéral du cadre pivotant 35 autour de l'axe de pivotement 34 dans le plan XY, et un vérin 44 pour actionner un coulissement vertical parallèlement à l'axe vertical Z du cadre pivotant 35. Ce vérin 44 permet en outre de mettre en contact la meule et le patin du rail avec une force bien déterminée.

Le cadre pivotant 35 supporte quant à lui une meule 43 entraînée en rotation par un moteur 39 par l'intermédiaire d'une courroie de transmission 40 entraînant l'arbre-broche 41 de la meule et le plateau porte-meule 42 sur lequel la meule 43 est fixée.

Le meulage du patin du rail s'effectue selon les étapes décrites ci-dessus.

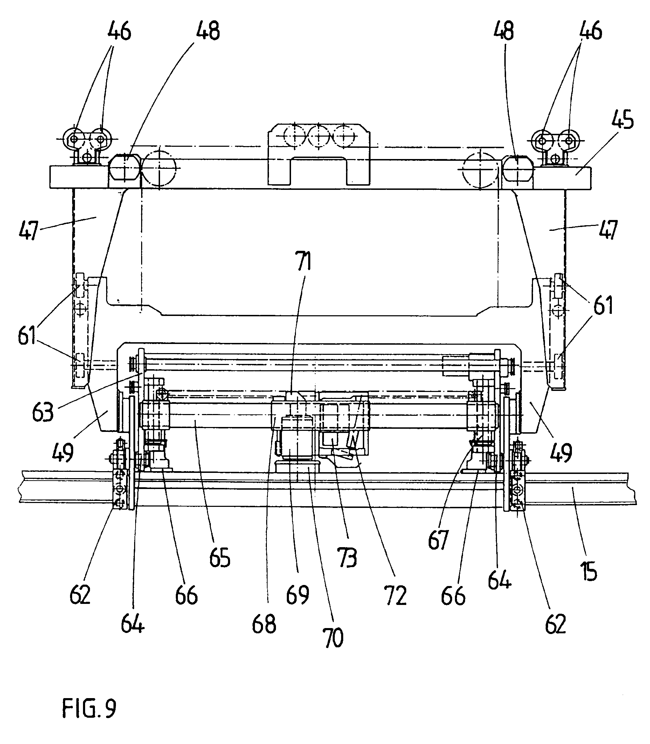

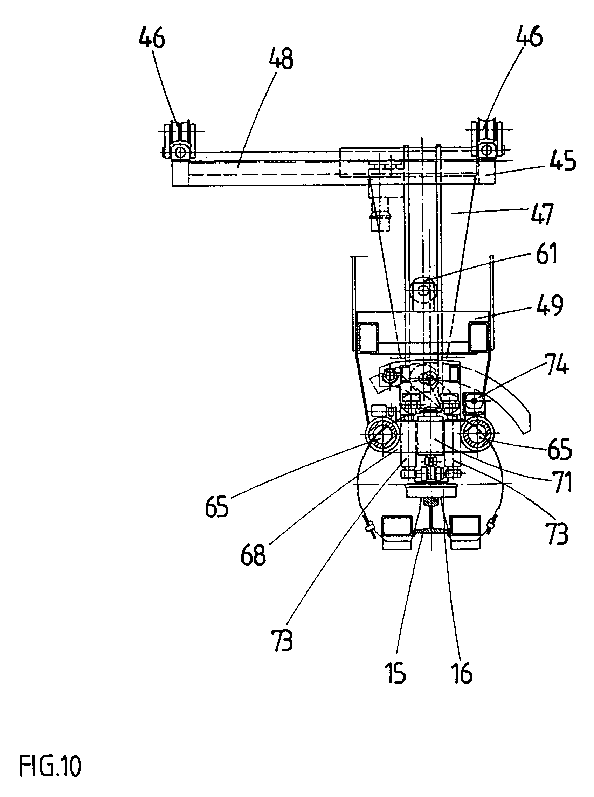

Le moyen de meulage du champignon du rail est décrit en référence aux figures 9 et 10. Ce second moyen de meulage comporte en particulier un chariot support 45 monté sur le châssis par l'intermédiaire de galets de suspension 46 permettant son déplacement longitudinal parallèlement à l'axe X par rapport au châssis, un premier cadre 47 coulissant transversalement parallèlement à l'axe Y sur des tubes de guidage transversal 48 fixés au chariot support 45, un second cadre 49 coulissant verticalement parallèlement à l'axe Z par rapport au premier cadre 47 sur des galets de guidage vertical 61, des pinces de blocage 62 pour bloquer le second cadre 49 sur le rail soudé 15, et un troisième cadre 63 pivotant autour d'un axe de pivotement 64 parallèle à l'axe X permettant de changer l'angle de meulage du champignon du rail. Le troisième cadre 63 supporte une tête de meulage 68 par l'intermédiaire des tubes de guidage longitudinal 65 parallèles à l'axe X, des patins d'appui 66 sur le rail pour les tubes de guidage longitudinal 65, d'axes de guidage vertical 67 des tubes de guidage longitudinal 65. Le troisième cadre 63 supporte en outre un vérin de commande 72 de la hauteur de la meule 70 dans la tête de meulage 68 et un guidage vertical 73 de la meule, et un vérin de commande 74 du mouvement longitudinal de la tête de meulage 68.
La tête de meulage 68 comprend quant à elle la meule 70 entraînée par un moteur 71 par l'intermédiaire d'une broche 69.
Le cadre 63 étant monté pivotant autour de l'axe 64, dès que le meulage selon un angle est terminé, la meule peut être positionnée à un autre angle par rotation du cadre 63 et une succession d'angles de meulage du champignon peut être choisie ou programmée.

Le meulage du champignon du rail s'effectue selon les étapes décrites ci-dessus.

Pour la mise en oeuvre d'un procédé entièrement automatique, la machine comprend une unité de commande, des moyens de transmission, tels que des câbles, et des capteurs de position déterminant en permanence les positions de l'unité de soudage 16, des moyens de meulage, des unités d'établis, des moyens de préhension et des pinces dans la base de référence orthogonale XYZ de la machine. Cette unité de commande permettant alors de déterminer les commandes des déplacements de l'unité de soudage, des moyens de meulage, des unités d'établis, des moyens de préhension et des pinces nécessaire à la mise en oeuvre du procédé, et les moyens de transmission permettent quant à eux de transmettre, d'une part, les valeurs détectées par les capteurs à l'unité de commande et de transmettre, d'autre part, les commandes de déplacement déterminées par l'unité de commande à l'unité de soudage, aux moyens de meulage, aux unités d'établis, aux moyens de préhension et aux pinces.

Les capteurs de position peuvent être des capteurs optiques ou bien des capteurs incrémentaux, analogiques ou digitaux.

Les modes d'exécution de l'invention décrits ci-dessus le sont à titre d'exemple, et des modifications, dans le cadre de la protection revendiquée, sont possibles.

Sur les figures 2 et 3, pendant que la file de rail 15' est soudée, la position de l'autre file de rails 15 doit être inférieure à cause de l'encombrement de la machine de soudage. Mais, selon une autre forme d'exécution, un abaissement de l'une des files de rails pour permettre la soudure de l'autre file de rails n'est pas nécessaire, grâce à des modifications de la construction de certains éléments, par exemple la longueur des bras des pinces 5, 5', 6 et 6'.

Selon une autre forme de construction, l'appareil de soudage 16 peut également se déplacer dans le sens vertical: ainsi, il n'est pas nécessaire de déplacer verticalement les files de rails pour le soudage.

Pendant tout le temps de travail, les tronçons des deux rails se trouvant de part et d'autre du joint de soudure sont solidement maintenus par les quatre pinces de l'établi et les pinces aux extrémités du véhicule pour éviter toute déformation du rail, notamment lorsqu'il est soumis à l'échauffement et au refroidissement. L'espace entre chaque paire de pinces de l'établi est d'environ 2,5 mètres, ce qui permet un travail aisé des appareils de soudage et de meulage. Le seul moment où les pinces antérieures 5, 5' (dans le sens de déplacement du véhicule) sont légèrement desserrées est lors du soudage par étincelage-forgeage afin de permettre le déplacement longitudinal du rail. A la fin de ce travail, les pinces sont serrées à nouveau pour éviter toute déformation ultérieure du rail.

## Revendications

1. Procédé de soudage d'au moins une file de nouveaux rails de chemin de fer à substituer aux anciens rails, préalablement déposés sur la voie, au moyen d'une machine (1) roulant sur les anciens rails munie notamment d'un appareil de soudage (16) par étincelage-forgeage, de moyens de meulage (29 et de moyens de saisie et de guidage des nouveaux rails, comprenant les étapes suivantes:
- on saisit par des moyens de préhension (5,5',6,6'), on lève, on amène et on maintient les abouts des rails (15,15') en position de travail en ligne droite au moins sur la longueur de la machine,
- on déplace l'appareil de soudage (16) d'une position d'attente en une position de travail et on procède au soudage de deux abouts de rails d'une file par étincelage-forgeage, tout en permettant au rail se trouvant en aval de coulisser longitudinalement lors du soudage,
- on dégage l'appareil de soudage dès que la soudure est terminée et on le déplace soit dans la position de travail suivante, soit en position d'attente,
- on amène un premier moyen de meulage d'une position d'attente en une position de travail sur le joint soudé et on procède au meulage du dessous du patin des rail dans la région de la soudure pour enlever le bourrelet de la soudure,
- on enlève ledit premier moyen de meulage dès que le meulage est terminé et on le ramène en position d'attente,
- on amène un deuxième moyen de meulage d'une position d'attente en une position de travail sur le joint soudé et on procède au meulage de la table de roulement et des joues de roulement du champignon du rail dans la région de la soudure,
- on enlève ledit deuxième moyen de meulage dès que le meulage est terminé et on l'amène soit sur un joint soudé suivant, soit en position d'attente,
- on dépose les rails soudés au centre de la voie et on les libère des moyens de préhension.

2. Procédé selon la revendication 1, caractérisé par le fait que:
- on soude successivement deux files de rails placées l'une à côté de l'autre,
- on amène un troisième moyen de meulage, identique au premier moyen de meulage, d'une position d'attente en une position de travail sur le joint soudé de la deuxième file et on procède au meulage du dessous du patin des rails de la deuxième file dans la région de la soudure pour enlever le bourrelet de la soudure,
- on enlève ledit troisième moyen de meulage dès que le meulage est terminé et on le ramène en position d'attente, et par le fait que les étapes de meulage s'effectuent successivement de la manière suivante:
- on meule avec le premier moyen de meulage le dessous du patin de la première file de rails pendant que l'on effectue la soudure sur la deuxième file de rails,
- on meule avec le troisième moyen de meulage le dessous du patin de la deuxième file de rails pendant que l'on meule avec le deuxième moyen de meulage la table de roulement et les joues de roulement du champignon de la première file de rails dans la région de la soudure,
- on meule finalement avec le deuxième moyen de meulage la table de roulement et les joues de roulement du champignon de la deuxième file de rails, - on termine en déposant les deux files de rails au centre de la voie.

3. Procédé selon la revendication 1 ou 2, caractérisé par le fait que le meulage du champignon s'effectue par des mouvements de va-et-vient longitudinal et de basculement latéral de la tête de meulage du deuxième moyen de meulage après avoir positionné ledit deuxième moyen de meulage à cheval sur les deux abouts soudés et l'avoir bloqué audits abouts.

4. Procédé selon l'une des revendications 1 à 3, caractérisé par le fait que l'on procède à un refroidissement accéléré du champignon du rail à la soudure immédiatement après la soudure des abouts des rails.

5. Procédé selon la revendication 4, caractérisé par le fait que l'on procède au refroidissement accéléré par des jets d'air.

6. Procédé selon l'une des revendications 2 à 5, caractérisé en ce que les positions des unités de travail par rapport à la machine sont déterminées selon les étapes suivantes:
a. une base de référence orthogonale XYZ est définie sur la machine, X étant parallèle à l'axe de la voie, Y étant parallèle aux traverses et Z étant perpendiculaire au plan XY,
b. les positions des moyens de préhension (5,5',6,6'), de l'appareil de soudage (16) et des moyens de meulage (29) par rapport à la base de la machine sont mesurées en permanence par des capteurs.

7. Procédé selon la revendication 6, caractérisé en ce que les déplacements des moyens de préhension (5,5',6,6'), de l'appareil de soudage (16) et des moyens de meulage (29) s'effectuent de la manière suivante:
- les rails sont amenés en position de travail et reposés en voie par des déplacements en Y et en Z des moyens de préhension,
- l'appareil de soudage est positionné précisément sur le joint à souder de la première file, sur le joint à souder de la deuxième file et ramené dans sa position d'attente par des déplacements en X, en Y et en Z,
- le premier moyen de meulage pour le meulage du dessous du patin du rail de la première file est positionné sur le joint soudé par des déplacements en Y et en Z et le meulage est effectué par des mouvements de va-et-vient en Y de la meule,
- le premier moyen de meulage est ramené en position d'attente par des déplacements en Y et en Z,
- le deuxième moyen de meulage pour le meulage du champignon du rail est positionné précisément sur le joint soudé de la première file et sur le joint soudé de la deuxième file par des déplacements en X, en Y et en Z,
- le meulage du champignon de la première file et de la deuxième file est effectué par des mouvements contrôlés de va-et-vient de la meule en X et en Z ainsi que par rotation du deuxième moyen de meulage autour d'un axe parallèle à l'axe X,
- le deuxième moyen de meulage est ramené en position d'attente par des déplacements en X, en Y et en Z,
- le troisième moyen de meulage pour le meulage du dessous du patin du rail de la deuxième file est positionné sur le joint soudé par des déplacements en Y et en Z et le meulage est effectué par des mouvements de va-et-vient en Y de la meule,
- le troisième moyen de meulage est ramené en position d'attente par des déplacements en Y et en Z.

8. Procédé selon la revendication 7, caractérisé en ce que pendant un cycle de travail, les déplacements des moyens de préhension (5,5'6,6'), de l'appareil de soudage (16) et des appareils de meulage (29), et ainsi que toutes les opérations associées sont commandées automatiquement par une unité de commande automatique, ladite unité de commande étant programmable selon les étapes suivantes:
a) après la saisie des rails par les moyens de préhension, ceux-ci sont amenés en position de travail par les déplacements en Y et en Z des moyens de préhension,
b) l'appareil de soudage est positionné précisément sur le joint à souder de la première file par les déplacements en X, en Y et en Z,
c) la soudure est effectuée sur la première file,
d) l'appareil de soudage est positionné précisément sur le joint à souder de la deuxième file par les déplacements en X, en Y et en Z, puis la soudure est effectuée sur la deuxième file, en même temps que le premier moyen de meulage pour le meulage du dessous du patin du rail de la première file est positionné sur le joint soudé par les déplacements en Y et en Z, et que le meulage est effectué par les mouvements de va-et-vient en Y de la meule,
e) le premier moyen de meulage est amené en position d'attente par les déplacements en Y et en Z dès que l'opération de meulage du dessous du patin de la première file est terminée,
f) l'appareil de soudage est amené dans sa position d'attente par les déplacements en X, en Y et en Z, en même temps que le troisième moyen de meulage pour le meulage du dessous du patin du rail de la deuxième file est positionné sur le joint soudé par les déplacements en Y et en Z, et que le meulage est effectué par les mouvements de va-et-vient en Y de la meule,
que le deuxième moyen de meulage pour le meulage du champignon du rail est positionné précisément sur le joint soudé de la première file par les déplacements en X, en Y et en Z,
et que le meulage du champignon est effectué par les mouvements contrôlés de va-et-vient de la meule en X et en Z ainsi que par rotation de la meule autour d'un axe parallèle à l'axe X,
g) le troisième moyen de meulage est renvoyé en position d'attente par les déplacements en Y et en Z dès que l'opération de meulage du dessous du patin de la deuxième file est terminée,
h) le deuxième moyen de meulage pour le meulage du champignon du rail est positionné précisément sur le joint soudé de la deuxième file par les déplacements en X, en Y et en Z, et le meulage du champignon est effectué par les mouvements contrôlés de va-et-vient de la meule en X et en Z ainsi que par rotation de la meule autour d'un axe parallèle à l'axe X,
i) le deuxième moyen de meulage est renvoyé dans sa position d'attente par les déplacements en X, en Y et en Z dès que l'opération de meulage du champignon de la deuxième file est terminée,
j) les rails sont reposés en voie par les déplacements en Y et Z des moyens de préhension, puis les rails sont libérés par l'ouverture de ces moyens de préhension.

9. Procédé selon l'une des revendications 1 à 8, caractérisé par le fait que les rails de chemin de fer sont posés sur des supports à galets préalablement déposés sur la voie.

10. Machine de soudage pour la mise en oeuvre du procédé selon l'une des revendications 1 à 9, la machine étant un véhicule (1) équipé pour se déplacer sur les rails, ledit véhicule (1) étant muni au moins d'un groupe générateur d'énergie, d'une unité programmable de commande automatique et entre ses boggies d'un châssis surélevé permettant de travailler en dessous de lui, ledit châssis supportant:
- au moins une unité de soudage (16),
- au moins un premier et un deuxième moyen de meulage (29),
- deux unités d'établis comprenant chacune une poutre (4,4') équipée de moyens de préhension (5,5',6,6') pour la saisie, le levage et le maintien des rails (15,15') en position de travail,
- un ensemble de pinces aux extrémités du véhicule (31,32),
- des capteurs de position,
- des moyens de transmission,
ladite unité de soudage, lesdits moyens de meulage et lesdites unités d'établis étant agencés pour pouvoir être déplacés longitudinalement, transversalement et verticalement,
lesdites pinces étant agencées pour pouvoir être déplacées verticalement et transversalement et permettant la saisie des rails à traiter en coopération avec les moyens de préhension des unités d'établis, lesdits capteurs étant destinés à déterminer en permanence les positions de l'unité de soudage, des moyens de meulage, des unités d'établis, des moyens de préhension et des pinces dans une base de référence orthogonale XYZ de la machine, l'axe X étant parallèle à l'axe de la voie, l'axe Y étant parallèle aux traverses et l'axe Z étant perpendiculaire au plan XY, ladite unité de commande permettant de déterminer les commandes des déplacements de l'unité de soudage, des moyens de meulage, des unités d'établis, des moyens de préhension et des pinces,
lesdits moyens de transmission permettant de transmettre les valeurs détectées par les capteurs à l'unité de commande et de transmettre les commandes de déplacement déterminées par l'unité de commande à l'unité de soudage, aux moyens de meulage, aux unités d'établis, aux moyens de préhension et aux pinces.

11. Machine selon la revendication 10, caractérisée en ce qu'elle comprend en outre des moyens de refroidissement (23,30) du champignon du rail (15,15').

12. Machine selon l'une des revendications 10 ou 11, caractérisée en ce que les poutres (4,4') sont plus rigide qu'un rail de chemin de fer, et que chaque poutre (4,4') est dotée d'au moins deux paires de pinces (5,5',6,6') combinées pour la saisie et le positionnement précis l'un par rapport à l'autre des abouts de tout type de rail de chemin de fer, lesdites pinces (5,5',6,6') comprenant une mâchoire mobile et au moins trois butées (54,53,52) de positionnement dont le calibre est adapté à chaque type de rail,
- la première butée (54) assurant l'alignement de la table de roulement du rail (15,15'),
- la seconde butée (53) assurant l'alignement de la joue de roulement du rail (15,15'), et
- la troisième butée (52), disposée du même côté que la seconde butée, assurant l'alignement latéral du patin du rail (15,15'), l'espacement entre les pinces adjacentes de deux paires de pinces étant suffisant pour permettre les travaux de soudage et de meulage.

13. Machine selon la revendication 10, caractérisée en ce que la mâchoire mobile de chaque pince (5,5',6,6') est constituée par:
- un premier levier (55) articulé sur un premier pivot fixe horizontal (56),
- un sabot (57) suspendu sur un deuxième pivot horizontal (58),
- un deuxième levier articulé à une extrémité sur ledit premier pivot fixe horizontal (56) et à l'autre extrémité sur ledit deuxième pivot horizontal (58), ledit premier levier étant actionné par un premier vérin (59) et étant agencé pour saisir, positionner et maintenir le champignon du rail dans la pince dans le sens vertical,
l'extrémité libre du deuxième levier étant articulée sur ledit sabot, étant actionnée par un deuxième vérin (61) en synchronisme avec le premier vérin (59) et étant agencée pour saisir, positionner et maintenir le rail dans la pince dans le sens transversal.

14. Machine selon l'une des revendications 10 à 13, caractérisée en ce que chaque unité d'établi comprend à chacune de ses extrémités un dispositif (12,13) permettant de saisir un joint isolant situé le long de la voie et de l'intercaler entre deux sections normales de rails (15,15').

15. Machine selon l'une des revendications 10 à 14, caractérisée en ce que les moyens de meulage (29) comportent au moins un premier moyen de meulage pour meuler le dessous du patin des rails (15,15'), un second moyen de meulage pour meuler la table de roulement et des joues de roulement du champignon des rails (15,15').

16. Machine selon la revendication 15, caractérisée en ce que le premier moyen de meulage comporte au moins deux bras supports (28) articulés par une extrémité sur l'une des poutres (4,4') des unités d'établis,
un châssis (25) fixé à l'autre extrémité des bras supports par l'intermédiaire de deux tourillons (26), des moyens pour faire pivoter les bras supports (28) d'une position d'attente en une position de travail, un support (33) monté sur le châssis (25) et portant un cadre pivotant (35) par l'intermédiaire d'un palier de pivotement latéral (38) et d'un axe de pivotement latéral (34),
des moyens (36,37) pour actionner un pivotement latéral du cadre pivotant (35) autour de l'axe de pivotement (34) dans le plan XY et des moyens (44) pour actionner un coulissement vertical parallèlement à l'axe Z du cadre pivotant (35),
le cadre pivotant (35) supportant une meule (43) et des moyens d'entraînement (39,40,41,42) de la meule (43).

17. Machine selon l'une des revendications 15 ou 16, caractérisée en ce que le second moyen de meulage comporte
un chariot support (45) avec des moyens de suspension (46) permettant son déplacement longitudinal parallèlement à l'axe X par rapport au châssis surélevé,
un premier cadre (47) coulissant transversalement parallèlement à l'axe Y sur des moyens de guidage transversal (48) fixés au chariot support (45),
un second cadre (49) coulissant verticalement parallèlement à l'axe Z par rapport au premier cadre (47) sur des moyens de guidage vertical (61), des pinces de blocage (62) pour bloquer le second cadre (49) sur le rail soudé,
un troisième cadre (63) pivotant autour d'un axe de pivotement (64) parallèle à l'axe X permettant de changer l'angle de meulage du rail,
le troisième cadre (63) supportant une tête de meulage (68) par l'intermédiaire de moyens de guidage longitudinal (65) parallèles à l'axe X, des patins d'appui (66) sur le rail pour les moyens de guidage longitudinal (65), un moyen de guidage vertical (67) des moyens de guidage longitudinal (65), un moyen de commande (72) de la hauteur de la meule (70) dans la tête de meulage (68), un moyen de commande (74) du mouvement longitudinal de la tête de meulage,
la tête de meulage (68) comportant une meule (70), des moyens d'entraînement (69,71) de la meule (70) et des moyens de guidage vertical (73) du mouvement de la meule (70) dans la tête de meulage (68).

18. Machine selon l'une des revendications 15, 16 ou 17, caractérisée en ce que les moyens de meulage (29) comportent un troisième moyen de meulage identique au premier moyen de meulage pour meuler le dessous du patin des rails (15,15').

## Claims

1. A process for welding at least one run of new railroad rails to be substituted for the old rails, already deposited on the track, by means of a machine (1) that runs along the old rails and is equipped in particular with forge equipment (16) for flash-force welding, with means for grinding (29) and with means for gripping and guiding the new rails, comprising the following steps:
- gripping means (5,5',6,6') are used to grip, lift, bring and hold the ends of the rails (15,15') in a working position in a straight line at least along the length of the machine,
- the welding equipment (16) is displaced from a standby position into a working position and two rail ends of a run are welded together by flash-forge welding while allowing the rail downstream to slide longitudinally during the welding,
- the welding equipment is disengaged as soon as welding is over and is displaced either into the next working position or into the standby position,
- a first grinding means is brought from a standby position into a position for working on the welded joint and the underside of the rail bottom is ground in the region of the weld in order to remove the weld bead,
- said first grinding means is removed as soon as grinding is over and is returned to the standby position,
- a second grinding means is brought from a standby position into a position for working on the welded joint and the running surface and the running sides of the rail head are ground in the region of the weld,
- said second grinding means is removed as soon as grinding is over and brought either onto a next welded joint or into the standby position,
- the welded rails are deposited in the centre of the track and released from the gripping means.

2. The process as claimed in claim 1, characterised by the fact that:
- two runs of rail placed one beside the other are welded in succession,
- a third grinding means identical to the first grinding means is brought from a standby position into a position for working on the welded joint of the second run and the underside of the rail bottom of the second run is ground in the region of the weld in order to remove the weld bead,
- said third grinding means is removed as soon as grinding is over and is returned to the standby position, and that the steps of grinding take place in succession as follows:
- the first grinding means is used to grind the underside of the rail bottom of the first run of rail while the second run of rail is being welded,
- the third grinding means is used to grind the underside of the rail bottom of the second run of rail while the second grinding means is being used to grind the running surface and the running sides of the rail head of the first run of rail in the region of the weld,
- finally, the second grinding means is used to grind the running surface and the running sides of the rail head of the second run of rail,
- to finish off, the two runs of rail are deposited in the centre of the track.

3. The process as claimed in claim 1 or 2, characterised by the fact that the rail head is ground using longitudinal reciprocating movements and sideways tilting movements of the grinding head of the second grinding means after said second grinding means has been positioned astride the two welded ends and clamped onto said ends.

4. The process as claimed in one of claims 1 to 3, characterised by the fact that there is accelerated cooling of the rail head at the weld immediately after the ends of the rails have been welded.

5. The process as claimed in claim 4, characterised by the fact that the accelerated cooling uses jets of air.

6. The process as claimed in one of claims 2 to 5, characterised in that the positions of the working units with respect to the machine are determined according to the following steps:
a. an orthogonal reference frame XYZ is defined on the machine, X being parallel to the axis of the track, Y being parallel to the crossties and Z being perpendicular to the XY plane,
b. the positions of the gripping means (5,5',6,6'), of the welding equipment (16) and of the grinding means (29) with respect to the frame of the machine are continually measured by sensors.

7. The process as claimed in claim 6, characterised in that the displacements of the gripping means (5,5',6,6'), of the welding equipment (16) and of the grinding means (29) take place as follows:
- the rails are brought into the working position and put back down on the track by displacements of the gripping means in the Y and Z directions,
- the welding equipment is positioned precisely over the joint to be welded of the first run, over the joint to be welded of the second run and returned to its standby position by displacements in the X, Y and Z directions,
- the first grinding means for grinding the underside of the rail bottom of the first run is positioned over the welded joint by displacements in the Y and Z directions, and grinding takes place by reciprocating movements of the grinding wheel in the Y direction,
- the first grinding means is returned to the standby position by displacements in the Y and Z directions,
- the second grinding means for grinding the rail head is positioned precisely over the welded joint of the first run and over the welded joint of the second run by displacements in the X, Y and Z directions,
- the rail head of the first run and of the second run is ground by controlled reciprocating movements of the grinding wheel in the X and Z directions and by rotating the second grinding means about an axis parallel to the X-axis,
- the second grinding means is returned to the standby position by displacements in the X, Y and Z directions,
- the third grinding means for grinding the underside of the rail bottom of the second run is positioned over the welded joint by displacements in the Y and Z directions, and grinding takes place by reciprocating movements of the grinding wheel in the Y direction,
- the third grinding means is returned to the standby position by displacements in the Y and Z directions.

8. The process as claimed in claim 7, characterised in that during a working cycle, displacements of the gripping means (5,5',6,6'), of the welding equipment (16) and of the grinding equipment (29), together with all the associated operations are controlled automatically by an automatic control unit, said control unit being programmable for the following steps:
a) after the gripping means have gripped the rails, they are brought into the working position by the displacements of the gripping means in the Y and Z directions,
b) the welding equipment is positioned precisely over the joint to be welded of the first run by the displacements in the X, Y and Z directions,
c) the first run is welded,
d) the welding equipment is positioned precisely over the joint to be welded of the second run by the displacements in the X, Y and Z directions, then the second run is welded at the same time as the first grinding means for grinding the underside of the rail bottom of the first run is positioned over the welded joint by the displacements in the Y and Z directions, and grinding is carried out by reciprocating movements of the grinding wheel in the Y direction,
e) the first grinding means is brought into the standby position by the displacements in the Y and Z directions as soon as the operation of grinding the underside of the rail bottom of the first run is over,
f) the welding equipment is brought into its standby position by the displacements in the X, Y and Z directions, at the same time as the third grinding means for grinding the underside of the rail bottom of the second run is positioned over the welded joint by the displacements in the Y and Z directions, and grinding is carried out by the reciprocating movements of the grinding wheel in the Y direction,
the second grinding means for grinding the rail head is positioned precisely over the welded joint of the first run by the displacements in the X, Y and Z directions,
and the rail head is ground by the controlled reciprocating movements of the grinding wheel in the X and Z directions and by rotating the grinding wheel about an axis parallel to the X-axis,
g) the third grinding means is returned to the standby position by the displacements in the Y and Z directions as soon as the operation of grinding the underside of the rail bottom of the second run is over,
h) the second grinding means for grinding the rail head is positioned precisely over the welded joint of the second run by the displacements in the X, Y and Z directions, and the rail head is ground by the controlled reciprocating movements of the grinding wheel in the X and Z directions as well as by rotating the grinding wheel about an axis parallel to the X-axis,
i) the second grinding means is returned to its standby position by the displacements in the X, Y and Z directions as soon as the operation of grinding the rail head of the second run is over,
j) the rails are put back down on the track by the displacements of the gripping means in the Y and Z directions, then the rails are released by opening these gripping means.

9. The process as claimed in any of claims 1 to 8, characterised in that the railroad rails are laid on roller-type supports already deposited on the track.

10. A welding machine for implementing the process as claimed in one of claims 1 to 9, the machine being a vehicle (1) equipped to run along the rails, said vehicle (1) being equipped at least with an energy generator set, with a programmable automatic control unit and, between its bogies, with a raised chassis allowing work to be carried out underneath it, said chassis supporting:
- at least one welding unit (16),
- at least a first and a second grinding means (29),
- two workbench units each comprising a beam (4,4') equipped with gripping means (5,5', 6,6') for gripping, lifting and holding the rails (15,15') in working position,
- a set of grippers at the ends of the vehicle (31,32),
- position sensors,
- transmission means,
- said welding unit, said grinding means and said workbench units being organised so that they can be displaced longitudinally, transversely and vertically,
said grippers being organised so that they can be displaced vertically and transversely, and in conjunction with the gripping means of the workbench units allowing the gripping of the rails to be treated,
said sensors being intended continuously to determine the positions of the welding unit, of the grinding means, of the workbench units, of the gripping means and of the grippers in an orthogonal reference frame XYZ of the machine, the X-axis being parallel to the axis of the track, the Y-axis being parallel to the crossties and the Z-axis being perpendicular to the XY plane,
said control unit allowing the commands for the displacements of the welding unit, of the grinding means, of the workbench units, of the gripping means and of the grippers to be determined,
said transmission means allowing the values detected by the sensors to be transmitted to the control unit and allowing the displacement commands determined by the control unit to be transmitted to the welding unit, to the grinding means, to the workbench units, to the gripping means and to the grippers.

11. The machine as claimed in claim 10, characterised in that it further comprises means (23,30) for cooling the rail head (15,15').

12. The machine as claimed in either of claims 10 and 11, characterised in that the beams (4,4') are more rigid than a railroad rail, and in that each beam (4,4') has at least two pairs of grippers (5,5',6,6') combined for gripping and precisely positioning one with respect to the other, ends of any type of railroad rail,
said grippers (5,5',6,6') comprising a moving jaw and at least three positioning stops (54,53,52), the size of which is matched to each type of rail,
- the first stop (54) providing alignment of the running surface of the rail (15,15'),
- the second stop (53) providing alignment of the running side of the rail (15,15'), and
- the third stop (52), arranged on the same side as the second stop, providing lateral alignment of the rail bottom (15,15'),
the spacing between the adjacent grippers of two pairs of grippers being large enough to allow the welding and grinding work.

13. The machine as claimed in claim 10, characterised in that the moving jaw of each gripper (5,5',6,6') comprises:
- a first lever (55) articulated to a first horizontal fixed pivot (56),
- a shoe (57) suspended from a second horizontal pivot (58),
- a second lever articulated at one end to said first horizontal fixed pivot (56) and at the other end to said second horizontal pivot (58),
said first lever being operated by a first ram (59) and being organised so that it grips, positions and holds the rail head in the gripper in the vertical sense,
the free end of the second lever being articulated to said shoe, being operated by a second ram (61) in synchronism with the first ram (59) and being organised so that it grips, positions and holds the rail in the gripper in the transverse sense.

14. The machine as claimed in any of claims 10 to 13, characterised in that each workbench unit comprises at each of its ends a device (12,13) allowing an insulating joint situated along the track to be gripped and inserted between two normal sections of rail (15,15').

15. The machine as claimed in any of claims 10 to 14, characterised in that the grinding means (29) comprise at least a first grinding means for grinding the underside of the rail bottom (15,15'),
a second grinding means for grinding the running surface and running sides of the rail head (15,15').

16. The machine as claimed in claim 15, characterised in that the first grinding means comprises at least two support arms (28) articulated by one end to one of the beams (4,4') of the workbench units,
a chassis (25) fixed to the other end of the support arms via two journals (26), means for making the support arms (28) pivot from a standby position into a working position,
a support (33) mounted on the chassis (25) and carrying a pivoting frame (35) via a lateral pivoting bearing (38) and a lateral pivot pin (34),
means (36,37) for bringing about a lateral pivoting of the pivoting frame (35) about the pivot pin (34) in the XY plane and means (44) for bringing about vertical sliding of the pivoting frame (35) parallel to the Z-axis,
the pivoting frame (35) supporting a grinding wheel (43) and means (39,40,41,42) for driving the grinding wheel (43).

17. The machine as claimed in either of claims 15 and 16, characterised in that the second grinding means comprises:
a support carriage (45) with suspension means (46) allowing its longitudinal displacement parallel to the X-axis with respect to the raised chassis,
a first frame (47) sliding transversely parallel to the Y-axis on transverse guidance means (48) fixed to the support carriage (45),
a second frame (49) sliding vertically parallel to the Z-axis with respect to the first frame (47) on vertical guidance means (61), clamps (62) for clamping the second frame (49) onto the welded rail,
a third frame (63) pivoting about a pivot pin (64) parallel to the X-axis, allowing the angle of grinding of the rail to be changed, the third frame (63) supporting a grinding head (68) via longitudinal guidance means (65) parallel to the X-axis, runners (66) for resting on the rail for the longitudinal guidance means (65), a vertical guidance means (67), longitudinal guidance means (65), a means (72) for controlling the height of the grinding wheel (70) in the grinding head (68), a means (74) for controlling the longitudinal movement of the grinding head,
the grinding head (68) comprising a grinding wheel (70), means (69,71) for driving the grinding wheel (70) and means (73) for vertically guiding the movement of the grinding wheel (70) in the grinding head (68).

18. The machine as claimed in any of claims 15, 16 and 17, characterised in that the grinding means (29) comprise a third grinding means identical to the first grinding means for grinding the underside of the rail bottom (15,15').

## Patentansprüche

1. Verfahren zum Schweissen wenigstens eines Schienenstrangs neuer Eisenbahnschienen, die alte Schienen ersetzen und zuvor auf dem Gleis abgelegt wurden, mittels einer auf den alten Schienen rollenden Maschine, die insbesondere mit einer Schweissvorrichtung zum Abbrennstumpfschweissen, mit Schleifgeräten und mit Mitteln zum Greifen und Führen der neuen Schienen ausgerüstet ist, umfassend die folgenden Schritte:
- man ergreift mit den Mitteln zum Greifen (5, 5', 6, 6') die Enden der Schienen (15, 15'), hebt sie, bringt sie zur und hält sie an der Bearbeitungsstelle in gerader Linie wenigstens über die Länge der Maschine,
- man verschiebt die Schweissvorrichtung (16) aus einer Wartestellung an eine Bearbeitungsstelle und verschweisst die beiden Schienenenden eines Strangs durch Abbrennstumpfschweissen, wobei der hinteren Schiene erlaubt wird, sich während des Schweissens in Längsrichtung zu verschieben,
- sobald der Schweissvorgang beendet ist, löst man die Schweissvorrichtung und verschiebt sie zur folgenden Bearbeitungstelle oder in Wartestellung,
- man bringt ein erstes Schleifgerät aus einer Wartestellung an eine Bearbeitungsstelle an der Schweissverbindung und schleift unter dem Schienenfuss im Bereich der Schweissstelle, um den Schweisswulst zu entfernen,
- sobald der Schleifvorgang beendet ist, entfernt man das erwähnte erste Schleifgerät und bringt es in Wartestellung,
- man bringt ein zweites Schleifgerät aus einer Warteposition an eine Bearbeitungsstelle an der Schweissverbindung und schleift die Schienenlauffläche und die Laufbacken des Schienenkopfes im Bereich der Schweissstelle,
- sobald der Schleifvorgang beendet ist, entfernt man das erwähnte zweite Schleifgerät und bringt es zur folgenden Schweissverbindung oder in Warteposition,
- man verlegt die geschweissten Schienen in die Gleismitte und löst sie von den Mitteln zum Greifen.

2. Verfahren nach Anspruch 1, dadurch gekennzeichnet, dass:
- man sukzessive zwei nebeneinander angeordnete Schienenstränge schweisst,
- man ein drittes, mit dem ersten Schleifgerät identisches Schleifgerät aus einer Wartestellung an eine Bearbeitungsstelle an der Schweissverbindung des zweiten Strangs bringt und unter dem Schienenfuss des zweiten Strangs im Bereich der Schweissstelle schleift, um den Schweisswulst zu entfernen,
- man das erwähnte dritte Schleifgerät entfernt, sobald der Schleifvorgang beendet ist, und es in Wartestellung bringt, und man die Schleifschritte sukzessive in folgender Weise durchgeführt:
- man schleift mit dem ersten Schleifgerät die Unterseite des Fusses des ersten Schienenstrangs, während man auf dem zweiten Schienenstrang schweisst,
- man schleift mit dem dritten Schleifgerät die Unterseite des Fusses des zweiten Schienenstrangs, während man mit dem zweiten Schleifgerät die Lauffläche und die Laufbacken des Kopfs des ersten Schienenstrangs im Bereich der Schweissstelle schleift,
- man schleift schliesslich mit dem zweiten Schleifgerät die Lauffläche und die Laufbacken des Kopfes des zweiten Schienenstrangs,
- man beendet die Arbeit, indem man die beiden Schienenstränge in die Gleismitte verlegt.

3. Verfahren nach Anspruch 1 und 2, dadurch gekennzeichnet, dass das Schleifen des Schienenkopfs durch Hin- und Herbewegung in Längsrichtung und durch seitliches Kippen des Schleifkopfs des zweiten Schleifgeräts erfolgt, nachdem dieses zweite Schleifgerät auf die beiden verschweissten Schienenenden, diese übergreifend, aufgesetzt und an diesen Enden blockiert worden ist.

4. Verfahren nach einem der Ansprüche 1 bis 3, dadurch gekennzeichnet, dass man unmittelbar nach dem Verschweissen der Schienenenden den Schienenkopf an der Schweissstelle beschleunigt abkühlt.

5. Verfahren nach Anspruch 4, dadurch gekennzeichnet, dass man mittels Luftstrahlen beschleunigt abkühlt.

6. Verfahren nach einem der Ansprüche 2 bis 5, dadurch gekennzeichnet, dass die Positionen der Arbeitseinheiten in Bezug auf die Maschine gemäss folgenden Schritten bestimmt werden:
a. es wird eine orthogonale Bezugsbasis XYZ auf der Maschine definiert, wobei X parallel zur Gleisachse, Y parallel zu den Schwellen und Z senkrecht zur XY-Ebene orientiert sind,
b. die Positionen der Mittel zum Greifen (5, 5', 6, 6'), der Schweissvorrichtung (16) und der Schleifgeräte (29) in Bezug auf die Basis der Maschine werden ständig durch Sensoren gemessen.

7. Verfahren nach Anspruch 6, dadurch gekennzeichnet, dass die Verschiebungen der Mittel zum Greifen (5, 5', 6, 6'), der Schweissvorrichtung (16) und der Schleifgeräte (29) in folgender Weise durchgeführt werden:
- die Schienen werden an die Bearbeitsstelle gebracht und auf dem Gleis durch Verschiebungen der Mittel zum Greifen in Y- und in Z-Richtung abgelegt,
- die Schweissvorrichtung wird genau an der zu verschweissenden Verbindung des ersten Schienenstrangs, an der zu verschweissenden Verbindung des zweiten Schienenstrangs positioniert und durch Verschiebungen in X-, Y- und Z-Richtung in Wartestellung zurückgebracht,
- das erste Schleifgerät zum Schleifen der Unterseite des Schienenfusses des ersten Strangs wird durch Verschiebungen in Y- und in Z-Richtung an der Schweissverbindung positioniert, und es erfolgt das Schleifen durch Hin- und Herbewegungen des Schleifkörpers in Y-Richtung,
- das erste Schleifgerät wird durch Verschiebungen in Y und in Z-Richtung in Wartestellung gebracht,
- das zweite Schleifgerät zum Schleifen des Schienenkopfs wird durch Verschiebungen in X-, Y- und Z-Richtung genau an der Schweissverbingung des ersten Strangs und an der Schweissverbindung des zweiten Strangs positioniert,
- das Schleifen des Schienenkopfs des ersten Strangs und des zweiten Strangs erfolgt durch gesteuerte Hin- und Herbewegungen des Schleifkörpers in X- und Z Richtungen sowie durch Drehung des zweiten Schleifgeräts um eine parallel zur X-Achse liegende Achse,
- das zweite Schleifgerät wird durch Verschiebungen in X-, Y- und Z-Richtung in Wartestellung gebracht,
- das dritte Schleifgerät zum Schleifen der Unterseite des Schienenfusses des zweiten Strangs wird durch Verschiebungen in Y- und Z-Richtung an der Schweissverbindung positioniert, und das Schleifen erfolgt durch Hin- und Herbewegungen des Schleifkörpers in Y-Richtung,
- das dritte Schleifgerät wird durch Verschiebungen in Y-und Z-Richtungen in Wartestellung gebracht.

8. Verfahren nach Anspruch 7, dadurch gekennzeichnet, dass während eines Arbeitszyklus die Verschiebungen der Mittel zum Greifen (5, 5', 6, 6'), der Schweissvorrichtung (16) und der Schleifgeräte (29) sowie alle begleitenden Operationen automatisch von einer automatischen Steuereinheit gesteuert werden, welche gemäss den folgenden Schritten programmierbar ist:
a) nachdem die Schienen von den Mitteln zum Greifen ergriffen worden sind, werden sie durch die Verschiebungen dieser Mittel zum Greifen in Y- und in Z-Richtung an die Bearbeitungsstelle gebracht,
b) die Schweissvorrichtung wird durch die Verschiebungen in X-, Y- und Z-Richtung genau an der zu verschweissenden Verbindung des ersten Strangs positioniert,
c) die Schweissung erfolgt am ersten Strang,
d) die Schweissvorrichtung wird durch die Verschiebungen in X-, Y- und Z-Richtung genau an der zu verschweissenden Verbindung des zweiten Strangs positioniert, dann erfolgt die Schweissung am zweiten Strang, zur gleichen Zeit wird das erste Schleifgerät zum Schleifen der Unterseite des Schienenfusses des ersten Strangs durch die Verschiebungen in Y- und Z-Richtung an der Schweissverbindung positioniert, und das Schleifen erfolgt durch die Hin -und Herbewegungen des Schleifkörpers in Y-Richtung,
e) sobald das Schleifen der Unterseite des Schienenfusses des ersten Strangs beendet ist, wird das erste Schleifgerät durch die Verschiebungen in Y- und Z-Richtung in Wartestellung gebracht,
f) die Schweissvorrichtung wird durch die Verschiebungen in X-, Y- und Z-Richtung in ihre Wartestellung gebracht, gleichzeitig wird das dritte Schleifgerät zum Schleifen der Unterseite des Schienenfusses des zweiten Strangs durch die Verschiebungen in Y- und Z-Richtung an der Schweissverbindung positioniert, und das Schleifen erfolgt durch die Hin- und Herbewegungen des Schleifkörpers in Y-Richtung, das zweite Schleifgerät zum Schleifen des Schienenkopfs wird durch die Verschiebungen in X-, Y- und Z-Richtung genau an der Schweissverbindung des ersten Strangs positioniert, und das Schleifen des Schienenkopfs erfolgt durch die gesteuerte Hin- und Herbewegungen des Schleifkörpers in X- und in Z-Richtung sowie durch Drehen des Schleifkörpers um eine parallel zur X-Achse liegende Achse,
g) sobald das Schleifen der Unterseite des Schienenfusses des zweiten Strangs beendet ist, wird das dritte Schleifgerät durch die Verschiebungen in Y- und in Z-Richtung in Wartestellung zurückgebracht,
h) das zweite Schleifgerät zum Schleifen des Schienenkopfs wird durch die Verschiebungen in X-, Y- und Z-Richtung genau an der Schweissverbindung des zweiten Strangs positioniert, und das Schleifen des Schienenkopfs erfolgt durch die gesteuerten Hin- und Herbewegungen des Schleifkörpers in X- und in Z-Richtung sowie durch Drehen des Schleifkörpers um eine parallel zur X-Achse liegende Achse,
i) sobald das Schleifen des Schienenkopfs des zweiten Strangs beendet ist, wird das zweite Schleifgerät durch die Verschiebungen in X-, Y- und Z-Richtung in seine Wartestellung zurückgebracht,
j) die Schienen werden durch die Verschiebungen der Mittel zum Greifen in Y- und in Z-Richtung auf das Gleis zurückgelegt und dann durch Öffnen dieser Mittel zum Greifen freigesetzt.

9. Verfahren nach einem der Ansprüche 1 bis 9, dadurch gekennzeichnet, dass die Eisenbahnschienen auf Rollentraggestelle gelegt werden, welche zuvor auf dem Gleis verlegt worden sind.

10. Schweissmaschine zur Durchführung des Verfahrens nach einem der Ansprüche 1 bis 9, bestehend aus einem Fahrzeug (1), das dazu eingerichtet ist, auf den Schienen zu fahren, und welches wenigstens einen Generatorsatz zur Energieerzeugung, eine programmierbare Einheit zum automatischen Steuern und zwischen den Fahrgestellen einen hochliegenden Fahrzeugrahmen aufweist, der es erlaubt, unter ihm Arbeiten auszuführen, und welcher folgendes trägt:
- wenigstens eine Schweisseinheit (16),
- wenigstens ein erstes und ein zweites Schleifgerät (29),
- zwei Werkbank-Einheiten von denen jede einen Träger (4, 4') aufweist, der mit Mitteln zum Greifen (5,5', 6, 6') ausgerüstet ist, um die Schienen (15, 15') zu ergreifen, zu heben und an der Bearbeitungsstelle zu halten,
- eine Mehrzahl von Schienenrückern (31, 32) am Ende des Fahrzeugs,
- Lagesensoren,
- Übertragungsmittel,
wobei die erwähnte Schweisseinheit, die erwähnten Schleifgeräte und die erwähnten Werkbankeinheiten dazu eingerichtet sind, in Längsrichtung, in Querrichtung und vertikal verschoben zu werden,
die erwähnten Schienenrücker dazu eingerichtet sind, vertikal und in Querrichtung verschoben zu werden und die zu bearbeitenden Schienen im Zusammenwirken mit den Mitteln zum Greifen der Werkbankeinheiten zu ergreifen, die Sensoren sind dazu vorgesehen, ständig die Positionen der Schweisseinheit, der Schleifgeräte, der Werkbankeinheiten, der Mittel zum Greifen und der Schienenrücker in einer orthogonalen Bezugsbasis XYZ der Maschine zu bestimmen, wobei die X-Achse parallel zur Gleisachse, die Y-Achse parallel zu den Schwellen und die Z-Achse senkrecht zur XY-Ebene liegt,
wobei die erwähnte Steuereinheit die Befehle zum Verschiebe der Schweisseinheit, der Schleifgeräte, der Mittel zum Greifen und der Schienenrücker zu bestimmen erlaubt,
und wobei die erwähnten Übertragungsmittel die von den Sensoren erfassten Werte an die Steuereinheit zu übertragen und die von der Steuereinheit bestimmten Verschiebungsbefehle an die Schweisseinheit, die Schleifgeräte, die Werkbankeinheiten, die Mittel zum Greifen und die Schienenrücker zu übertragen erlauben.

11. Maschine nach Anspruch 10, dadurch gekennzeichnet, dass sie ferner Mittel (23, 30) zum Kühlen des Schienenkopfes (15, 15') aufweist.

12. Maschine nach einem der Ansprüche 10 oder 11, dadurch gekennzeichnet, dass die Träger (4, 4') steifer sind als eine Eisenbahnschiene und dass jeder Träger (4, 4') mit zwei Paaren von kombinierten Schienenrückern (5, 5', 6, 6') ausgerüstet ist, um die Schienenenden jedes Typs von Eisenbahnschienen zu ergreifen und genau zueinander zu positionieren,
wobei die erwähnten Schienenrücker (5, 5', 6, 6') bewegliche Klemmbacken und wenigstens drei Positionierungsanschläge (54, 53, 52) aufweisen, deren Abmessungen jedem Schienentyp angepasst ist, wobei
- der erste Anschlag (54) die Ausrichtung der Schienenlauffläche (15, 15'),
- der zweite Anschlag (53) die Ausrichtung der Laufbacken der Schienen (15, 15') und
- der dritte Anschlag (52), der auf der gleichen Seite wie der zweite Anschlag liegt, die seitliche Ausrichtung des Fusses der Schienen (15, 15') gewährleistet, und wobei der Abstand zwischen den benachbarten Schienenrückern zweier Rückerpaare genügend gross ist, um die Schweiss- und Schleifarbeiten zu ermöglichen.

13. Maschine nach Anspruch 10, dadurch gekennzeichnet, dass die beweglichen Klemmbacken jedes Schienenrückers (5, 5', 6, 6') aus folgenden Teilen bestehen:
- einem ersten Hebel (55), der auf einem ersten festen horizontalen Drehzapfen (56) angelenkt ist,
- einem Schuh (57) der an einem zweiten horizontalen Drehzapfen (58) aufgehängt ist,
- einem zweiten Hebel, der mit einem Ende auf dem erwähnten ersten horizontalen Drehzapfen (56) und mit dem anderen Ende auf dem erwähnten zweiten horizontalen Drehzapfen (58) angelenkt ist,
wobei der erste Hebel durch ein erstes Stellglied (59) betätigbar und dazu eingerichtet ist, den Schienenkopf im Schienenrücker zu ergreifen, zu positionieren und im vertikalen Sinne zu halten,
und wobei das freie Ende des zweiten Hebels an dem erwähnten Schuh angelenkt ist, durch ein zweites Stellglied (61) synchron mit dem ersten Stellglied (59) betätigbar und dazu eingerichtet ist, die Schiene im Schienenrücker zu ergreifen, zu positionieren und im transversalen Sinne zu halten.

14. Maschine nach einem der Ansprüche 10 bis 13, dadurch gekennzeichnet, dass jede Werkbankeinheit an jedem ihrer Enden eine Einrichtung (12, 13) aufweist, die es erlaubt, einen längs des Gleises liegenden Isolierstoss zu ergreifen und zwischen zwei normale Abschnitte der Schienen (15, 15') einzufügen.

15. Maschine nach einem der Ansprüche 10 bis 14, dadurch gekennzeichnet, dass die Schleifgeräte (29) wenigstens ein erstes Mittel zum Schleif zum Schleifen der Unterseite der Füsse der Schienen (15, 15') und ein zweites Mittel zum Schleif zum Schleifen der Lauffläche und der Laufbacken des Kopfes der Schienen (15, 15') aufweisen.

16. Maschine nach Anspruch 15, dadurch gekennzeichnet, dass das erste Mittel zum Schleifen folgende Teile aufweist:
wenigstens zwei Tragarme (28), die mit einem Ende auf einem der Träger (4, 4') der Werkbankeinheiten angelenkt sind,
ein Gestell (25), das am anderen Ende der Tragarme mittels zweier Zapfen (26) befestigt ist,
Mittel zum Schwenken der Tragarme (28) aus einer Wartestellung in eine Bearbeitungsstellung,
ein auf dem Gestell (25) montiertes Tragteil (33), welches einen mittels eines seitlichen Gelenklagers und einer seitlichen Drehachse (34) schwenkbaren Rahmen (35) trägt,
Mittel (36, 37) zum Ausführen einer seitlichen Drehung des schwenkbaren Rahmens (35) um die Drehachse (34) in der XY-Ebene und Mittel (44) zum Ausführen einer vertikalen Verschiebung des schwenkbaren Rahmens (35) parallel zur Z-Achse,
wobei der schwenkbare Rahmen (35) einen Schleifkörper (43) und Mittel zum Antrieb (39, 40, 41, 42) des Schleifkörpers (43) trägt.

17. Maschine nach einem der Ansprüche 15 oder 16, dadurch gekennzeichnet, dass das zweite Mittel zum Schleifen folgende Teile aufweist:
einen Tragschlitten (45) mit Aufhängmitteln (46), die seine Längsverschiebung parallel zur X-Achse in Bezug auf den hochliegenden Fahrzeugrahmen erlauben,
einen ersten Rahmen (47), der quer parallel zur Y-Achse auf transversalen Führungsmitteln verschiebbar ist, welche auf dem Tragschlitten (45) befestigt sind,
einen zweiten Rahmen (49), der vertikal parallel zur Z-Achse in Bezug auf den ersten Rahmen (47) auf vertikalen Führungsmitteln (61) verschiebbar ist,
Blockierungsklemmen (62) zum Blockieren des zweiten Rahmens (49) auf der geschweissten Schiene,
einen dritten Rahmen (63), der um eine zur X-Achse parallele Drehachse (64) drehbar ist und eine Änderung des Schleifwinkels der Schiene erlaubt,
wobei der dritte Rahmen (63) mittels parallel zur X-Achse angeordneten Längsführungsmitteln (65) einen Schleifkopf (68), Abstützschuhe (66) zum Abstützen der Längsführungsmittel (65) auf der Schiene, ein Mittel (67) zum vertikalen Führen der Längsführungsmittel (65), ein Steuermittel (72), um die Höhe des Schleifkörpers (70) im Schleifkopf (68) zu steuern, und ein Steuermittel (74) trägt, um die Längsbewegung des Schleifkopfes zu steuern,
wobei der Schleifkopf (68) einen Schleifkörper (70), Mittel zum Antrieb (69, 71) des Schleifkörpers (70) und Mittel (73) zur vertikalen Führung (73) der Bewegung des Schleifkörpers (70) im Schleifkopf (68) aufweist.

18. Maschine nach einem der Ansprüche 15, 16 oder 17, dadurch gekennzeichnet, dass die Schleifgeräte (29) ein drittes Mittel zum Schleifen aufweisen, das mit dem ersten Mittel zum Schleifen identisch ist und zum Schleifen der Unterseite des Fusses der Schienen (15, 15') dient.
